# NEUE EUROPÄISCHE PATENTSCHRIFT

(11) **EP 1 053 289 B2**
(45) Veröffentlichungstag und Bekanntmachung des Hinweises auf die Entscheidung über den Einspruch: **03.06.2009**
(45) Hinweis auf die Patenterteilung: 14.08.2002
(21) Anmeldenummer: 99904866.3
(22) Anmeldetag: 05.02.1999
(51) Int. Cl.: C09J 7/02, G09F 3/10

(54) **SELBSTKLEBEBONROLLE**
SELF-ADHESIVE LABEL ROLL
ROULEAU D'ETIQUETTES AUTOCOLLANTES

(30) Priorität: 06.02.1998 DE 29801957 U
(43) Veröffentlichungstag der Anmeldung: 22.11.2000
(73) Patentinhaber: Bizerba GmbH & Co. KG, 72336 Balingen (DE)
(72) Erfinder: WENZEL, Peter, D-45529 Hattingen (DE); WURSTER, Klaus, D-72124 Pliezhausen (DE)
(74) Vertreter: Hoeger, Stellrecht & Partner Patentanwälte
(86) Internationale Anmeldenummer: PCT/EP1999/000788
(87) Internationale Veröffentlichungsnummer: WO 1999/040159

(56) Entgegenhaltungen:
- EP-A- 0 747 871
- CA-A- 2 172 238
- GB-A- 2 013 613
- GB-A- 2 198 369
- US-A- 4 851 383
- US-A- 5 153 043
- US-A- 5 370 916
- US-A- 5 378 301
- US-A- 5 578 352
- US-A- 5 707 713
- US-A- 5 782 496

## Beschreibung

Die Erfindung betrifft eine Selbstklebebonrolle in Form eines bedruckbaren Endlosstreifens, von dem einzelne selbstklebende Klebebons abtrennbar sind, wobei der Endlosstreifen trägerbandlos ist, eine Streifenoberfläche mit einer Haftschicht versehen ist und eine dieser Streifenoberfläche gegenüberliegende bedruckbare Streifenoberfläche mit einer Antihaftschicht versehen ist, so daß der Endlosstreifen zu einer Rolle aufwickelbar ist, wobei der Endlosstreifen so ausgebildet ist, daß selbstklebende Klebebons an einer Abreißkante oder Schneidkante abtrennbar sind.

Derartige bedruckbare Endlosstreifen werden, aufgewickelt zu einer Selbstklebebonrolle, insbesondere zum Abdruck von Warendaten in einem Drucker bzw. einer druckenden Ladentischwaage eingesetzt.

Bonrollen für Bons unterschiedlicher Länge werden beispielsweise in Druckwerken von Ladentischen zum Abdruck von warenspezifischen Daten wie Gewicht, Verkaufspreis, Artikelbezeichnung EAN-Strichcode usw. verwendet. Der Abdruck erfolgt auf einem von einer Vorratsrolle abgewickelten Endlosstreifen. Während des Abdrucks eines oder mehrerer Artikel bzw. Druckzeilen wird der Endlosstreifen durch den Drucker transportiert und nach Abschluß des Druckes von der Bedienungsperson entlang einer Abreißkante bzw. Schneidkante am Ausgang des Druckers abgetrennt.

Trägerbandlose oder trägerfolienlose, zu Etiketten vereinzelbare Endlosstreifen, welche auch als "linerless" bezeichnet werden, sind aus der EP-A-0 579 423, der EP-B-0 579 430 und der CA-A-2 172 238 bekannt. Um das Abwickeln von der aufgewickelten Vorratsrolle und damit das Trennen der aufgewickelten Lagen voneinander zu ermöglichen, ist die zu bedruckende Materialoberfläche mit einer zusätzlichen antihaftenden Schicht versehen. Die rückseitige Klebefläche, die bei der aufgewickelten Vorratsrolle direkt auf der antihaftenden bedruckbaren Streifenoberfläche aufliegt, läßt sich dadurch wieder leicht von letzterer trennen.

Der Erfindung liegt die Aufgabe zugrunde, eine Selbstklebebonrolle gemäß dem Oberbegriff von Anspruch 1 derart zu verbessern, daß die Klebebons leicht zu handhaben und universell einsetzbar sind.

Diese Aufgabe wird bei einer Selbstklebebonrolle gemäß dem Oberbegriff von Anspruch 1 dadurch gelöst, daß die der bedruckbaren Streifenoberfläche gegenüberliegende Streifenoberfläche mindestens einen sich in einer Längsrichtung des Endlosstreifens erstreckenden kleberfreien Streifen aufweist, welcher an einem Rand oder in der Nähe eines Randes der mit der Haftschicht versehenen Streifenoberfläche angeordnet ist und so dimensioniert ist, daß ein abzutrennender bzw. abgetrennter selbstklebender Klebebon an dem oder den kleberfreien Streifen angefaßt werden kann.

Aus dem Stand der Technik bekannte bedruckbare Endlosstreifen sind so ausgeführt, daß die Klebefläche vollflächig ist. Derartige Ausführungen sind aber schlecht geeignet für die Verarbeitung in einem Drucker mit manuellem Abtrennen insbesondere an einer Abreißkante, weil die Bedienungsperson bei jedem Abreißvorgang auch die vollflächig klebende Bonrückseite anfassen muß.

Dies bewirkt ein leichtes Festkleben von Daumen- bzw. Fingerkuppen und kann bereits nach einer geringen Anzahl von Abreißvorgängen Hautreizungen auslösen.

Durch den oder die erfindungsgemäß vorgesehenen kleberfreien Bereiche läßt sich der Klebebon anfassen und abtrennen, insbesondere manuell abreißen oder abnehmen und dann aufkleben, ohne daß die Bedienungsperson mit dem Klebstoff in Berührung kommt.

Die erfindungsgemäßen selbstklebenden Klebebons lassen sich selbstverständlich auch als selbstklebende Etiketten verwenden.

Vorteilhafterweise ist der Endlosstreifen aus einem Papier- oder Kunststoffmaterial gefertigt, so daß er sich auf kostengünstige Weise herstellen läßt.

Es ist vorgesehen, daß mindestens ein kleberfreier Bereich sich in Längsrichtung des Endlosstreifens erstreckt. Diese Ausführungsform ist besonders vorteilhaft, wenn die Klebebons, die von dem Endlosstreifen abgetrennt werden sollen, nicht alle die gleiche Länge aufweisen. Durch einen sich in Längsrichtung erstreckenden kleberfreien Streifen ist dafür gesorgt, daß jeder Klebebon unabhängig von seiner Länge einen kleberfreien Bereich aufweist. Da die selbstklebenden Klebebons, wenn sie aus dem Drucker kommen, bevorzugterweise am Rand angefaßt werden, ist es besonders vorteilhaft, wenn ein kleberfreier Streifen an einem Rand oder in der Nähe eines Randes der mit der Haftschicht versehenen Streifenoberfläche angeordnet ist.

Eine besonders vorteilhafte Ausführungsform ist dadurch gebildet, daß jeweils ein kleberfreier Streifen an den beiden Rändern oder in der Nähe der beiden Ränder der mit der Haftschicht versehenen Streifenoberfläche angeordnet ist. Der selbstklebende Klebebon kann dann unabhängig von seiner Austrittslage aus dem Drucker aus der Sicht des Bedienungspersonals wahlweise mit der linken oder rechten Hand an der Abreißkante getrennt und entnommen werden, ohne daß das Bedienungspersonal wissen muß, ob die mit der Haftschicht versehene Streifenoberfläche zur Bedienungsperson zuweist oder von der Bedienungsperson abweist.

Besonders vorteilhaft ist es, wenn die kleberfreien Streifen symmetrisch zu einer Längsachse des Endlosstreifens angeordnet sind. Der dann symmetrische Klebstoffauftrag ermöglicht die Herstellung von querspannungsarmen Klebebonrollen, bei der wellenförmige Aufwölbungen der Randkanten, die durch unterschiedliches Dehnungsverhalten von Druckträger und Klebeschicht entstehen können, vermieden sind.

Vorteilhafterweise haben der oder die kleberfreien Streifen eine Breite im Bereich von 10 mm bis 25 mm. Diese Breite stellt ein Optimum dar bezüglich der Anforderung, einerseits die Klebefläche zu maximieren, um ein sicheres Haften des selbstklebenden Klebebons zu ermöglichen, und andererseits einen kleberfreien Bereich zum Anfassen des selbstklebenden Klebebons zu schaffen.

Eine weitere, besonders vorteilhafte Variante einer Ausführungsform ergibt sich dadurch, daß der oder die kleberfreien Streifen in einem Abstand zu dem Rand oder den Rändern der mit der Haftschicht versehenen Streifenoberfläche angeordnet sind. Insbesondere ist es vorteilhaft, wenn jeweils ein kleberfreier Streifen in einem Abstand zu dem jeweiligen Rand der mit der Haftschicht versehenen Streifenoberfläche angeordnet ist. Günstigerweise liegt der Abstand im Bereich von ca. 0,5 mm bis ca. 3 mm. Derartige erfindungsgemäße bedruckbare Endlosstreifen sind bevorzugt dann zu verwenden, wenn selbstklebende Klebebons auf unebene Verpackungsoberflächen aufzukleben sind. Durch den Abstand wird das mögliche Abstehen der seitlichen Bonränder verhindert.

Bei einer universell einsetzbaren Variante einer Ausführungsform ist die Selbstklebebonrolle so ausgebildet, daß selbstklebende Klebebons beliebiger Länge abtrennbar sind. Insbesondere ist es günstig, wenn die Selbstklebebonrolle so ausgebildet ist, daß selbstklebende Klebebons an einer Abreißkante beispielsweise eines Druckers abtrennbar sind. Dadurch kann es vermieden werden, daß beispielsweise Perforationen in dem Endlosstreifen vorgesehen werden müssen, wodurch sich dieser kostengünstig herstellen läßt.

Vorteilhafterweise ist auf der bedruckbaren Streifenoberfläche unter der Antihaftschicht eine thermosensitive Schicht angeordnet. Dies erlaubt den Einsatz des Endlosstreifens in Thermodruckern. In Verbindung mit einer am Druckergehäuse angeordneten Abreißschiene ergibt sich dadurch eine besonders kompakte und kostengünstige Lösung.

Besonders vorteilhaft ist es, wenn die Selbstklebebonrolle so aufgewickelt ist, daß die mit der Haftschicht versehene Streifenoberfläche in Richtung des Rolleninneren liegt. Dies bedeutet, daß die bedruckbare Streifenoberfläche nach außen zeigt und die Streifenoberfläche, welche mit der Haftschicht versehen ist, in Richtung des Rolleninneren zeigt. Dadurch ist eine fertig gewickelte Selbstklebebonrolle auf der Außenseite ohne klebende Flächen und läßt sich dann problemlos zu Sammelgebinden verpacken und verschicken.

In der Zeichnung zeigen:
- Figur 1:: eine perspektivische Teilansicht eines Druckers zur Verarbeitung von Selbstklebebonrollen;
- Figur 2:: eine erfindungsgemäße Selbstklebebonrolle mit teilweise abgewickeltem Rollenanfang mit Draufsicht auf die klebende Bonrückseite mit einem kleberfreien Randstreifen;
- Figur 3:: eine Selbstklebebon-Rückseite mit zwei kleberfreien Randstreifen als ein zweites Ausführungsbeispiel; und
- Figur 4:: eine Selbstklebebon-Rückseite in einem dritten Ausführungsbeispiel mit zwei kleberfreien Randstreifen mit zusätzlichen schmalen klebenden Seitenrändern.

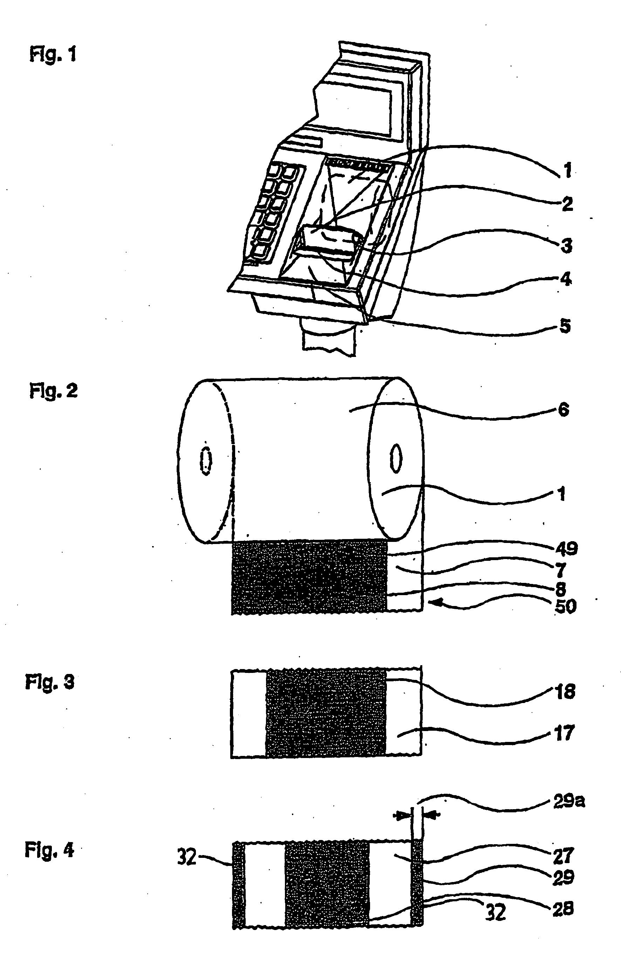

In Figur 1 ist die Teilansicht eines Thermodruckers 5 mit Tastatur und Anzeigeeinheit zur Verarbeitung von Thermo-Selbstklebebonrollen dargestellt. Eine Selbstklebebonrolle 1 ist in eine Aussparung des Druckergehäuses eingelegt und mittels transparenter Abdeckung geschützt. Der Bonrollenanfang wird in das in der Darstellung nicht sichtbare Druckwerk eingeführt.

Nach dem Start des Druckwerks, z. B. durch Eingabe einer Artikelnummer durch die Bedienungsperson, druckt dieses eine oder mehrere Druckzeilen auf die bedruckbare Außenfläche 6 des Klebebonstreifens der Selbstklebebonrolle 1. Während des Druckens wird der Klebebonstreifen durch den Drucker transportiert. Der Klebebonstreifen wird dabei soweit durch die Austrittsöffnung 3 des Druckers 5 geschoben, bis der komplette Abdruck außerhalb des Druckers 5 sichtbar ist.

Danach wird dieser herausragende Streifen als Klebebon 2 oder selbstklebende Etikette von der Bedienung z. B. mit Daumen und Zeigefinger an einem kleberfreien Randstreifen 7, 17, 27 erfaßt und mit einer nach vorne schräg zur Austrittsöffnung 3 verlaufenden Handbewegung zu einer in der Nähe der Austrittsöffnung angeordneten Abreißkante 4 abgetrennt. Falls der Drucker zusätzlich mit einem Schneidemesser zur automatischen Abtrennung des Klebebons 2 ausgerüstet ist, braucht dieser selbstklebende Klebebon nur noch von Hand entnommen werden.

Figur 2 zeigt ein erstes Ausführungsbeispiel einer Selbstklebebonrolle 1. Die Selbstkleberolle 1 ist durch die Aufwicklung eines Endlosstreifens 50 gebildet. Der Endlosstreifen ist auf einer Streifenoberfläche 49 mit einer Haftschicht 8 versehen und auf einer bedruckbaren Streifenoberfläche, der Druckflächenseite 6, welche der mit der Haftschicht 8 versehenen Streifenoberfläche 49 gegenüberliegt, mit einer an sich bekannten zusätzlichen antihaftenden Beschichtung, beispielsweise aus Silikon, versehen. Die Aufwicklung des Endlosstreifens 50 ist dabei derart, daß die bedruckbare Streifenoberfläche 6 nach außen liegt und die mit der Haftschicht 8 versehene Streifenoberfläche 49 in Richtung des Rolleninneren zeigen. Die Außenseite der Klebebonrolle ist daher nichtklebend.

Die selbstklebende Schicht 8 bedeckt aber nicht die ganzen jeweiligen Streifenoberflächen 49, sondern ein Randstreifen 7 ist als kleberfreie Zone freigehalten. Dieser kleberfreie Randstreifen 7 erstreckt sich bei dieser Variante einer Ausführungsform über die gesamte Länge des aufgewickelten Endlosstreifens.

In Figur 3 ist ein zweites Ausführungsbeispiel der Erfindung dargestellt und zeigt ein Teilstück der Klebeflächenseite 49 des Endlosstreifens, d. h. die Selbtklebebon-Rückseite. Abweichend zu Figur 1 läßt die hier aufgebrachte Selbstklebeschicht 18 auf beiden Seiten des Klebebons je einen kleberfreien Randstreifen 17 frei. Die Selbstklebeschichtfläche 18 liegt bevorzugterweise mittig zur Längsachse 56 des Endlosstreifens 50. Diese Ausführungsart bietet besondere Vorteile bei der Klebebonrollen-Herstellung, weil durch die mittig aufgebrachte Klebefläche kaum schädliche Verzugskräfte auftreten. Außerdem kann der Klebebon 2 von der Bedienungsperson wahlweise mit der linken oder der rechten Hand entnommen werden.

Ein drittes Ausführungsbeispiel ist in Figur 4 dargestellt. Es weist, wie das zweite Ausführungsbeispiel, zwei kleberfreie Randstreifen 27 auf, die aber nicht direkt bündig mit den Seitenkanten des Endlosstreifens, sondern in einem Abstand 29a im Bereich von etwa 0,5 mm bis 3 mm von den jeweiligen Seitenrändern 32 entfernt verlaufen. Dadurch ist nicht nur die Mittelpartie 28 der Klebebon-Rückseite als Klebefläche ausgebildet, sondern auch die an den beiden Seitenränder des Klebebons verlaufenden Streifen 29.

Diese Ausführungsart wird vorzugsweise dann verwendet, wenn der Klebebon 2 auf unebene Verpackungsoberflächen aufzukleben ist, weil die klebenden Seitenstreifen 29 das eventuelle Abstehen der Ränder auf der Verpackung verhindern.

## Patentansprüche

1. Selbstklebebonrolle in Form eines bedruckbaren Endlosstreifens (50), von dem einzelne selbstklebende Klebebons (2) abtrennbar sind, wobei der Endlosstreifen (50) trägerbandlos ist und eine Streifenoberfläche (49) mit einer Haftschicht (8) und eine dieser Streifenoberfläche (49) gegenüberliegende bedruckbare Streifenoberfläche (6), die mit einer Antihaftschicht versehen ist, aufweist, so daß der Endlosstreifen zu einer Rolle (1) aufwickelbar ist, wobei der Endlosstreifen (50) so ausgebildet ist, daß selbstklebende Klebebons (2) an einer Abreißkante oder Schneidkante abtrennbar sind,
**dadurch gekennzeichnet, daß** die der bedruckbaren Streifenoberfläche (6) gegenüberliegende Streifenoberfläche (49) mindestens einen sich in einer Längsrichtung des Endlosstreifens (50) erstreckenden kleberfreien Streifen (7, 17, 27) aufweist, welcher an einem Rand (32) oder in der Nähe eines Randes (32) der mit der Haftschicht (8) versehenen Streifenoberfläche (49) angeordnet ist und so dimensioniert ist, daß ein von einem abgewickelten Endlosstreifen abzutrennender bzw. abgetrennter selbstklebender Klebebon an dem oder den kleberfreien Streifen angefaßt werden kann.

2. Selbstklebebonrolle nach Anspruch 1, **dadurch gekennzeichnet, daß** der Endlosstreifen (50) aus einem Papier- oder Kunststoffmaterial gefertigt ist.

3. Selbstklebebonrolle nach Anspruch 1 oder 2, **dadurch gekennzeichnet, daß** kleberfreie Streifen symmetrisch zu einer Längsachse des Endlosstreifens (50) angeordnet sind.

4. Selbstklebebonrolle nach einem der voranstehenden Ansprüche, **dadurch gekennzeichnet, daß** jeweils ein kleberfreier Streifen (27) an den beiden Rändern (32) oder in der Nähe der beiden Ränder (32) der mit der Haftschicht (8) versehenen Streifenoberfläche (49) angeordnet ist.

5. Selbstklebebonrolle nach einem der voranstehenden Ansprüche, **dadurch gekennzeichnet, daß** der oder die kleberfreien Streifen (7; 17; 27) eine Breite im Bereich von 10 mm bis 25 mm haben.

6. Selbstklebebonrolle nach einem der voranstehenden Ansprüche, **dadurch gekennzeichnet, daß** der oder die kleberfreien Streifen (27) in einem Abstand (29a) zu dem Rand oder den Rändern der mit der Haftschicht (8) versehenen Streifenoberfläche (49) angeordnet sind.

7. Selbstklebebonrolle nach Anspruch 6, **dadurch gekennzeichnet, daß** der Abstand (29a) im Bereich von ca. 0,5 mm bis ca. 3 mm liegt.

8. Selbstklebebonrolle nach einem der vorangehenden Ansprüche, **dadurch gekennzeichnet, daß** der Endlosstreifen (50) so ausgebildet ist, daß selbstklebende Klebebons (2) beliebiger Länge abtrennbar sind.

9. Selbstklebebonrolle nach einem der vorangehenden Ansprüche, **dadurch gekennzeichnet, daß** auf der bedruckbaren Streifenoberfläche (6) unter der Antihaftschicht eine thermosensitive Schicht angeordnet ist.

10. Selbstklebebonrolle nach einem der vorangehenden Ansprüche, **dadurch gekennzeichnet, daß** die Rolle (1) so aufgewickelt ist, daß die mit der Haftschicht (8) versehene Streifenoberfläche (49) in Richtung des Rolleninneren liegt.

## Claims

1. Self-adhesive label roll in the form of a printable continuous strip (50), from which individual self-adhesive labels (2) are removable, wherein the continuous strip (50) has no backing strip and comprises a strip surface (49) with an adhesive coating (8) and a printable strip surface (6) lying opposite said strip surface (49) and provided with a non-stick coating, so that the continuous strip may be rolled up into a roll (1), wherein the continuous strip (50) is designed in such a way that self-adhesive labels (2) are removable at a tear-off edge or cutting edge,
**characterized in that** the strip surface (49) lying opposite the printable strip surface (6) has at least one adhesive-free strip (7, 17, 27), which extends in a longitudinal direction of the continuous strip (50) and which is disposed at or in the vicinity of an edge (32) of the strip surface (49) provided with the adhesive coating (8) and is so dimensioned that a self-adhesive label, which is to be separated or has been separated from an unrolled continuous strip, may be gripped at the adhesive-free strip or strips.

2. Self-adhesive label roll according to claim 1, **characterized in that** the continuous strip (50) is made of a paper or plastics material.

3. Self-adhesive label roll according to claim 1 or 2, **characterized in that** adhesive-free strips are disposed symmetrically relative to a longitudinal axis of the continuous strip (50).

4. Self-adhesive label roll according to one of the preceding claims, **characterized in that** an adhesive-free strip (27) is disposed at or in the vicinity of each of the two edges (32) of the strip surface (49) provided with the adhesive coating (8).

5. Self-adhesive label roll according to one of the preceding claims, **characterized in that** the adhesive-free strip or strips (7; 17; 27) have a width in the range of 10 mm to 25 mm.

6. Self-adhesive label roll according to one of the preceding claims, **characterized in that** the adhesive-free strip or strips (27) are disposed at a spacing (29a) from the edge or edges of the strip surface (49) provided with the adhesive coating (8).

7. Self-adhesive label roll according to claim 6, **characterized in that** the spacing (29a) is in the range of ca. 0.5 mm to ca. 3 mm.

8. Self-adhesive label roll according to one of the preceding claims, **characterized in that** the continuous strip (50) is designed in such a way that self-adhesive labels (2) of any desired length are removable.

9. Self-adhesive label roll according to one of the preceding claims, **characterized in that** a heat-sensitive coating is disposed on the printable strip surface (6) under the non-stick coating.

10. Self-adhesive label roll according to one of the preceding claims, **characterized in that** the roll (1) is rolled up in such a way that the strip surface (49) provided with the adhesive coating (8) lies towards the roll interior.

## Revendications

1. Rouleau d'étiquettes autocollantes se présentant sous la forme d'une bande sans fin imprimable (50) de laquelle peuvent être détachées des étiquettes autocollantes (2) individuelles, dans lequel la bande sans fin (50) ne comporte aucune bande de support et présente une surface de bande (49) dotée d'une couche adhésive (8), et une surface de bande imprimable (6) qui est disposée à l'opposé de cette surface de bande (49) et qui est dotée d'une couche antiadhésive, de sorte que la bande sans fin est enroulable sur un rouleau (1), ladite bande sans fin (50) étant conformée de telle sorte que des étiquettes autocollantes (2) peuvent être détachées au niveau d'une ligne de déchirure ou d'une ligne de coupe,
**caractérisé en ce que** la surface de bande (49) disposée à l'opposé de la surface de bande imprimable (6) comporte au moins une bande (7, 17, 27) dépourvue de colle, qui s'étend dans la direction longitudinale de la bande sans fin (50), et qui est agencée au niveau d'un bord (32) ou à proximité d'un bord (32) de la surface de bande (49) dotée de la couche adhésive (8), et est dimensionnée de telle sorte qu'une étiquette autocollante individuelle détachée ou à détacher d'une bande sans fin déroulée peut être saisie au niveau de la ou des bandes dépourvues de colle.

2. Rouleau d'étiquettes autocollantes selon la revendication 1, **caractérisé en ce que** la bande sans fin (50) est fabriquée à partir de papier ou d'une matière plastique.

3. Rouleau d'étiquettes autocollantes selon la revendication 1 ou 2, **caractérisé en ce que** des bandes dépourvues de colle sont agencées symétriquement par rapport à un axe longitudinal de la bande sans fin (50).

4. Rouleau d'étiquettes autocollantes selon l'une des revendications précédentes, **caractérisé en ce qu'**une bande (27) dépourvue de colle est agencée sur chacun des deux bords (32) ou à proximité de chacun des deux bords (32) de la surface de bande (49) dotée de la couche adhésive (8).

5. Rouleau d'étiquettes autocollantes selon l'une des revendications précédentes, **caractérisé en ce que** la ou les bandes (7 ; 17 ; 27) dépourvues de colle ont une largeur comprise entre 10 mm et 25 mm.

6. Rouleau d'étiquettes autocollantes selon l'une des revendications précédentes, **caractérisé en ce que** la ou les bandes (27) dépourvues de colle sont agencées à une distance (29a) du bord ou des bords de la surface de bande (49) dotée de la couche adhésive (8).

7. Rouleau d'étiquettes autocollantes selon la revendication 6 , **caractérisé en ce que** la distance (29a) est comprise entre environ 0,5 mm et environ 3 mm.

8. Rouleau d'étiquettes autocollantes selon l'une des revendications précédentes, **caractérisé en ce que** la bande sans fin (50) est conformée de telle sorte que des étiquettes autocollantes (2) de longueur quelconque sont détachables.

9. Rouleau d'étiquettes autocollantes selon l'une des revendications précédentes, **caractérisé en ce qu'**une couche thermosensible est agencée sur la surface de bande imprimable (6) sous la couche antiadhésive.

10. Rouleau d'étiquettes autocollantes selon l'une des revendications précédentes, **caractérisé en ce que** le rouleau (1) est enroulé de telle façon que la surface de bande (49) dotée de la couche adhésive (8) est disposée en direction de l'intérieur du rouleau.
